# FASCICULE DE BREVET EUROPEEN

(11) **EP 3 233 529 B1**
(45) Date de publication et mention de la délivrance du brevet: **01.12.2021**
(21) Numéro de dépôt: 15808617.3
(22) Date de dépôt: 14.12.2015
(51) Int. Cl.: B60C 1/00, C08K 3/06, C08K 3/22, C08K 3/36, C08L 7/00, C08L 9/00

(54) **BANDE DE ROULEMENT DE PNEUMATIQUE**
REIFENLAUFFLÄCHE
TYRE TREAD

(30) Priorité: 19.12.2014 FR 1462894
(43) Date de publication de la demande: 25.10.2017
(73) Titulaire: Compagnie Générale des Etablissements Michelin, 63000 Clermont-Ferrand (FR)
(72) Inventeur: THOMASSON, Damien, 63040 Clermont-Ferrand Cedex 9 (FR); VALLAT, Perrine, 63040 Clermont-Ferrand Cedex 9 (FR); WEBER, Jean-Philippe, 63040 Clermont-Ferrand Cedex 9 (FR)
(74) Mandataire: Bocchi, Brigitte
(86) Numéro de dépôt international: PCT/EP2015/079563
(87) Numéro de publication internationale: WO 2016/096704

(56) Documents cités:
- EP-A1- 2 147 951
- EP-A1- 3 075 771
- EP-A1- 3 075 774
- EP-A1- 3 178 880
- WO-A1-2013/186150
- FR-A1- 2 992 322

## Description

La présente invention est relative aux compositions de caoutchoucs diéniques renforcées majoritairement par une charge inorganique telle que la silice, utilisables pour la fabrication bande de roulement de pneumatiques, et plus particulièrement pour des pneumatiques destinés à équiper des véhicules portant de lourdes charges et roulant à vitesse soutenue, tels que, par exemple les camions, tracteurs, remorques ou bus routiers, avion etc.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. Or depuis que les économies de carburant et la nécessité de protéger l'environnement sont devenues une priorité, il s'est avéré nécessaire de produire des pneumatiques ayant une résistance au roulement réduite sans pénalisation de leur résistance à l'usure.

On sait que l'utilisation de certaines charges inorganiques spécifiques qualifiées de "renforçantes", telle que la silice, présentant une haute dispersibilité, capables de rivaliser, du point de vue renforçant, avec des noirs de carbone de grade pneumatique, et offrant en outre à ces compositions une hystérèse réduite, synonyme d'une plus basse résistance au roulement pour les pneumatiques les comportant.

Cependant de nombreuses formulations de bande de roulement pour véhicules portant de lourdes charges et roulant à vitesse soutenue, comprennent majoritairement du caoutchouc naturel, et du noir de carbone ou un coupage de charges renforçantes (noir de carbone majoritaire et charge inorganique telle que de la silice). En effet, l'utilisation de charge inorganique majoritaire présente l'inconvénient en association avec le caoutchouc naturel de présenter des difficultés lors de la vulcanisation des pneumatiques et donc des bandes de roulement, en terme de cinétique avec une phase retard trop importante ainsi qu'une vitesse de réaction de vulcanisation plus lente qui impose des durées de cuisson élevées, voire même dans certains cas peut nuire à la cuisson d'autres postes du pneumatique.

Or, les Demanderesses ont découvert de façon surprenante que le fait de réduire le taux de zinc des formulations de caoutchouterie à base majoritairement de caoutchouc naturel et renforcées majoritairement d'une charge inorganique telle que silice, sans remplacer le zinc par un autre métal et permettait de pallier au problème de phase retard, tout en maintenant les améliorations de propriétés de la composition liées à l'utilisation de la silice.

En effet la vulcanisation des élastomères diéniques par le soufre est largement utilisée dans l'industrie du caoutchouc, en particulier dans celle du pneumatique. Pour vulcaniser les élastomères diéniques, on utilise un système de vulcanisation relativement complexe comportant, en plus du soufre, divers accélérateurs de vulcanisation ainsi qu'un ou plusieurs activateurs de vulcanisation, tout particulièrement des dérivés du zinc tels que l'oxyde de zinc (ZnO), des sels de zinc d'acides gras tels que le stéarate de zinc.

Ainsi la diminution de la quantité de zinc, est également intéressante en raison de l'impact environnemental connu de ces composés, notamment vis-à-vis de l'eau et des organismes aquatiques (classement R50 selon directive européenne 67/548/CE du 9 décembre 1996).

De plus, de façon tout à fait étonnante, il est apparu que de telles compositions permettaient en bande de roulement de pneumatique, d'obtenir pour ces pneumatiques des gains en usure.

En conséquence, un premier objet de l'invention concerne une bande de roulement pour pneumatique ayant une composition de caoutchouc à base d'au moins un polyisoprène, naturel ou de synthèse, avec un taux allant de 50 pce à 100 pce, une charge renforçante comprenant majoritairement en poids de la charge inorganique, un agent de couplage, un plastifiant avec un taux inférieur ou égal à 10 pce et un système de réticulation au soufre, caractérisé en ce que la composition contient un taux de zinc allant de 0,7 et 2 pce. Préférentiellement la composition comprend également un polybutadiène, BR, ou un copolymère butadiène-styrène, SBR, le taux de polyisoprène allant de 50 pce à 90 pce.

De préférence, la charge inorganique comprend de la silice et plus préférentiellement la charge inorganique est constituée par de la silice.

Selon une variante préférée de l'invention, le taux de zinc va de 1 à 1,5 pce.

Selon une variante de réalisation de l'invention, la charge inorganique représente au moins 60% massique de la charge renforçante, de préférence au moins 75% massique et plus préférentiellement encore au moins 90% massique.

Selon un mode de réalisation de l'invention, la composition comprend un BR ou un SBR avec un taux allant de 10 à 50 pce, de préférence le taux de polyisoprène va de 60 à 90 pce et que le taux de BR ou de SBR va de 10 à 40 pce.

Selon un autre mode de réalisation de l'invention, le taux de polyisoprène va de 50 à 80 pce et la composition comprend du BR avec un taux de 10 à 40 pce et du SBR avec un taux de 10 à 40 pce.

Avantageusement, le taux de plastifiant est inférieur ou égal à 5 pce, de préférence inférieur ou égal à 2 pce.

L'invention concerne également un pneumatique comportant une bande de roulement telle que décrite précédemment.

### I. MESURES ET TESTS UTILISES

Les compositions de caoutchouc sont caractérisées, avant et après cuisson, comme indiqué ci-après.

### Plasticité Moonev

On utilise un consistomètre oscillant tel que décrit dans la norme française NF T 43-005 (Novembre 1980). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

### Rhéométrie

Les mesures sont effectuées à 130°C avec un rhéomètre à chambre oscillante, selon la norme DIN 53529 - partie 3 (juin 1983). L'évolution du couple rhéométrique en fonction du temps décrit l'évolution de la rigidification de la composition par suite de la réaction de vulcanisation. Les mesures sont traitées selon la norme DIN 53529 - partie 2 (mars 1983) : Ti est le délai d'induction, c'est-à-dire le temps nécessaire au début de la réaction de vulcanisation ; T_{α} (par exemple T₉₅) est le temps nécessaire pour atteindre une conversion de α%, c'est-à-dire α% (par exemple 95%) de l'écart entre les couples minimum et maximum. On mesure également la constante de vitesse de conversion notée K (exprimée en min⁻¹), d'ordre 1, calculée entre 30% et 80% de conversion, qui permet d'apprécier la cinétique de vulcanisation.

### Propriétés dynamiques

Les propriétés dynamiques ΔG^{∗} et tan(δ)ₘₐₓ sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (60°C) selon la norme ASTM D 1349-99, ou selon les cas à une température différente. On effectue un balayage en amplitude de déformation de 0,1% à 100% (cycle aller), puis de 100% à 0,1% (cycle retour). Les résultats exploités sont le module complexe de cisaillement dynamique (G^{∗}) et le facteur de perte tan(δ). Pour le cycle retour, on indique la valeur maximale de tan(δ) observée, noté tan(δ)ₘₐₓ, ainsi que l'écart de module complexe (ΔG^{∗}) entre les valeurs à 0,1% et à 100% de déformation (effet Payne).

### Test d'usure

Dans le test d'usure réalisé sur route, on mesure la perte de poids moyenne d'un pneumatique après un kilométrage donné. On note 100 la perte de poids du témoin, un indice supérieur à 100 signifie que la perte de poids est inférieure à celle du témoin.

### II. DESCRIPTION DETAILLEE DE L'INVENTION

L'invention concerne une bande de roulement pour pneumatique ayant une composition de caoutchouc à base d'au moins un polyisoprène, naturel ou de synthèse, avec un taux allant de 50 pce à 90 pce, une charge renforçante comprenant majoritairement en poids de la charge inorganique, un agent de couplage, un plastifiant avec un taux inférieur ou égal à 10 pce et un système de réticulation au soufre, caractérisé en ce que la composition contient un taux de zinc allant de 0,7 à 1,5 pce et comprend en outre un polybutadiène, BR, ou un copolymère butadiène-styrène, SBR.

On notera que dans la notion de pce :« parties en poids pour cent parties d'élastomère », est pris en considération l'ensemble de tous les élastomères présents dans la composition finale.

Dans la présente description, sauf indication expresse différente, tous les pourcentages (%) indiqués sont des % en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

### Elastomère diénique

De façon usuelle, on utilise indifféremment dans le texte les termes « élastomère » et « caoutchouc » qui sont interchangeables.

Par élastomère ou caoutchouc "diénique", doit être compris de manière connue un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Selon l'invention, l'élastomère diénique majoritaire est de préférence un élastomère isoprénique, c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène ou un mélange de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Lorsque la composition est réalisée avec un procédé de mélangeage en phase liquide pour obtenir des mélanges maîtres à base de caoutchouc naturel et de noir de carbone, on utilise un latex de caoutchouc naturel ; le latex d'élastomère étant une forme particulière de l'élastomère qui se présente sous forme de particules d'élastomère dispersées dans l'eau.

Plus particulièrement, le caoutchouc naturel (NR) existe sous différentes formes comme le détaille le chapitre 3 « Latex concentrates : properties and composition », de K.F. Gaseley, A.D.T. Gordon et T.D. Pendle dans « Naturel Rubber Science and Technology », A.D. Roberts, Oxford University Press - 1988.

En particulier plusieurs formes de latex de caoutchouc naturel sont commercialisés : les latex de caoutchouc naturel dits « de champ » (« field latex »), les latex de caoutchouc naturel dits « concentrés » (« concentrated natural rubber latex »), les latex epoxydés (« ENR »), les latex déprotéinisés ou encore les latex prévulcanisés. Le latex de caoutchouc naturel de champ est un latex dans lequel de l'ammoniac a été ajouté pour éviter une coagulation précoce et le latex de caoutchouc naturel concentré correspond à un latex de champ qui a subi un traitement correspondant à un lavage suivi d'une nouvelle concentration. Les différentes catégories de latex de caoutchouc naturel concentrés sont répertoriées notamment selon la norme ASTM D 1076-06. Parmi ces latex de caoutchouc naturel concentrés, on distingue notamment des latex de caoutchouc naturel concentrés de qualité dite: « HA » (high ammonia) et de qualité dite « LA » ; on utilisera avantageusement pour l'invention des latex de caoutchouc naturel concentrés de qualité HA.

Le latex de NR peut être préalablement modifié physiquement ou chimiquement (centrifugation, traitement enzymatique, modifiant chimique...) Le latex peut être utilisé directement ou être préalablement dilué dans de l'eau pour faciliter sa mise en œuvre.

Bien entendu on peut envisager que les compositions conformes à l'invention contiennent un coupage avec un autre élastomère diénique ou non diénique.

Conviennent notamment à ce titre, dans le groupe des élastomères diéniques fortement insaturés, les polybutadiènes (en abrégé "BR"), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Les élastomères précités peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752). On peut aussi citer comme élastomères fonctionnels ceux préparés par l'utilisation d'un amorceur fonctionnel, notamment ceux portant une fonction amine ou étain (voir par exemple WO 2010072761).

Comme autres exemples d'élastomères fonctionnalisés, on peut citer également des élastomères (tels que SBR, BR, NR ou IR) du type époxydés.

On notera que le SBR peut être préparé en émulsion ("ESBR") ou en solution ("SSBR »).

Qu'il s'agisse de ESBR ou de SSBR, on utilise notamment un SBR ayant une teneur en styrène moyenne, par exemple comprise entre 10% et 35% en poids, ou une teneur en styrène élevée, par exemple de 35 à 55%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 65°C, de préférence supérieure ou égale à -50°C.

A titre de BR, conviennent les BR présentant un taux (% molaire) d'enchaînements cis-1,4 supérieur à 90%.

Avantageusement la composition comprend 100% de caoutchouc naturel ou de polyisoprène de synthèse.

Selon une variante de réalisation préférée de l'invention, la composition de la bande de roulement comprend un coupage de caoutchouc naturel ou de polyisoprène de synthèse, avec un taux de 50 à 100 pce, et de BR avec un taux allant de 10 à 50 pce.

Préférentiellement la composition présente un taux de polyisoprène va de 60 à 90 pce et un taux de BR allant de 10 à 40 pce.

Selon une autre variante de réalisation de l'invention, la composition comprend un coupage de caoutchouc naturel ou de polyisoprène de synthèse, avec un taux de 50 à 100 pce, et de SBR avec un taux allant de 10 à 50 pce.

Plus préférentiellement la composition présente un taux de polyisoprène va de 60 à 90 pce et un taux de SBR allant de 10 à 40 pce.

Selon une autre variante de réalisation de l'invention, la composition comprend un coupage de polyisoprène et de BR ou SBR, ainsi qu'un troisième élastomère diénique différent des deux premiers élastomères choisi parmi les polybutadiènes, les copolymères styrène-butadiènes, les copolymères d'isoprène-butadiène, les copolymères d'isoprène-styrène et les copolymères d'isoprène-butadiène-styrène.

De préférence, la composition présente ainsi un taux de polyisoprène allant de 50 à 80 pce, et comprend un BR avec un taux de BR de 10 à 40 pce et un SBR avec un taux de 10 à 40 pce.

La composition selon l'invention peut contenir un autre élastomère diénique. Les élastomères diéniques de la composition pouvant être utilisés en association avec tout type d'élastomère synthétique autre que diénique, voire avec des polymères autres que des élastomères, par exemple des polymères thermoplastiques.

### Charge renforçante - agent de couplage

On entend de manière connue par charge renforçante, une charge connue pour ses capacités à renforcer une composition de caoutchouc utilisable pour la fabrication de pneumatiques.

On trouve parmi ces charges renforçantes des charges organiques, telles que le noir de carbone et des charges inorganiques.

Par "charge inorganique renforçante", doit être entendu ici, de manière connue, toute charge inorganique ou minérale, quelles que soient sa couleur et son origine (naturelle ou de synthèse), encore appelée charge "blanche", charge "claire" ou encore charge "non-noire" ("non-black filler") par opposition au noir de carbone, cette charge inorganique étant capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique pour bande de roulement. Une telle charge se caractérise généralement par la présence de groupes fonctionnels, notamment hydroxyle (□OH), à sa surface, nécessitant en cela l'emploi d'un agent ou système de couplage destiné à assurer une liaison chimique stable entre l'élastomère et ladite charge.

On peut citer comme charge inorganique renforçante des charge du type siliceuse, telle que la silice, ou alumineuse, silice-alumine, oxyde de titane.

De préférence le taux total de charge renforçante totale est compris entre 20 et 150 pce, l'optimum étant de manière connue différent selon les applications particulières visées.

Selon un mode de réalisation privilégié le taux total de charge renforçante va de 30 à 90 pce, de préférence de 40 à 80 pce, et encore plus préférentiellement de 45 à 70 pce.

La charge renforçante pour la composition conforme à l'invention, comprend majoritairement une charge inorganique, de préférence de la silice. De préférence la charge inorganique représente au moins 60% massique de la charge renforçante, plus préférentiellement la charge inorganique représente au moins 75% massique de la charge renforçante et encore plus préférentiellement la charge inorganique représente au moins 90 % de la charge renforçante.

Selon un mode de réalisation préférentiel de l'invention, la composition optionnellement du noir de carbone ; le noir de carbone, lorsqu'il est présent, est utilisé à un taux inférieur à 30 pce, de préférence inférieur à 15 pce, plus préférentiellement inférieur à ou égale à 8 pce et encore plus préférentiellement inférieur à ou égale à 5 pce.

Comme noirs de carbone conviennent tous les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N400, N660, N683, N772). Les noirs de carbone pourraient être par exemple déjà incorporés à l'élastomère isoprénique sous la forme d'un masterbatch (voir par exemple demandes WO 97/36724 ou WO 99/16600).

Préférentiellement la charge inorganique comprend de la silice et encore plus préférentiellement elle est constituée par de la silice.

La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil 1165MP », « Zeosil 1135MP », « Zeosil 1115MP » et « Zeosil Premium 200 MP » de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/016387.

Précisons que la surface spécifique CTAB est déterminée selon la norme française NF T 45-007 de novembre 1987 (méthode B).

A titre de charge inorganique renforçante, on citera également les charges minérales du type alumineuse, en particulier de l'alumine (Al₂O₃) ou des (oxyde)hydroxydes d'aluminium, ou encore des oxydes de titane renforçants, par exemple décrits dans US 6 610 261 et US 6 747 087.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges inorganiques renforçantes, en particulier de silices hautement dispersibles telles que décrites ci-dessus.

Pour coupler la charge inorganique renforçante, notamment la silice, à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

La teneur en agent de couplage est avantageusement inférieure à 20 pce, étant entendu qu'il est en général souhaitable d'en utiliser le moins possible. Typiquement le taux d'agent de couplage représente de 0,5% à 15% en poids par rapport à la quantité de charge inorganique. Son taux est préférentiellement compris entre 0,5 et 12 pce, plus préférentiellement compris dans un domaine allant de 3 à 10 pce. Ce taux est aisément ajusté par l'homme du métier selon le taux de charge inorganique utilisé dans la composition.

Selon une autre variante de l'invention, la charge renforçante peut comprendre un autre charge organique, telle que par exemple des charges organiques de polyvinylaromatique fonctionnalisé telles que décrites dans les demandes WO-A-2006/069792 et WO-A-2006/069793, en respectant alors un taux total de charge organique inférieur à 20 pce, de préférence inférieur à 10 pce, plus préférentiellement inférieur à ou égale à 8 pce et encore plus préférentiellement inférieur à ou égale à 5 pce.

A la charge renforçante précédemment décrite, peuvent être également ajoutés, des charges inertes (i.e. non renforçantes) telles que particules d'argile, bentonite, talc, craie, kaolin avec un taux inférieur ou égal à 10 pce et préférentiellement inférieur ou égal à 5 pce.

### Additifs divers

Les compositions de caoutchouc conformes à l'invention peuvent comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269 (ou US2003-0212185), un système de réticulation à base soit de soufre, soit de donneurs de soufre et/ou de peroxyde et/ou de bismaléimides, des accélérateurs de vulcanisation, des activateurs de vulcanisation exclusion faite bien entendu des activateurs à base de zinc.

De préférence, ces compositions comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

Parmi ces résines plastifiantes hydrocarbonées (on rappelle que l'appellation "résine" est réservée par définition à un composé solide), on citera notamment les résines d'homo- ou copolymères d'alphapinène, betapinène, dipentène ou polylimonène, coupe C5, par exemple de copolymère coupe C5/styrène, utilisables seules ou en combinaison avec des huiles plastifiantes comme des huiles MES ou TDAE.

Le taux global d'un tel agent plastifiant est inférieur ou égal à 10 pce, de préférence inférieur ou égal à 5 pce et encore plus préférentiellement inférieur ou égal à 2 pce.

### Fabrication des compositions de caoutchouc

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel de l'invention, tous les constituants de base des compositions de l'invention, à l'exception du système de vulcanisation, à savoir la charge renforçante, l'agent de couplage le cas échéant, sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, notamment l'agent de couplage, les éventuels agents de recouvrement ou de mise en œuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

Le système de vulcanisation proprement dit est préférentiellement à base de soufre et d'un accélérateur primaire de vulcanisation, en particulier d'un accélérateur du type sulfénamide. A ce système de vulcanisation peuvent venir s'ajouter, incorporés au cours de la première phase non-productive et/ou au cours de la phase productive, divers accélérateurs secondaires ou activateurs de vulcanisation connus, tels que par exemple des acides gras comme l'acide stéarique, des dérivés guanidiques (en particulier diphénylguanidine), et en respectant une teneur en zinc de la composition allant de 0,7 à 2 pce, de préférence allant de 1 à 1,5 pce.

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique.

### III. EXEMPLES DE REALISATION DE L'INVENTION

### Préparation des compositions de caoutchouc

On procède pour les essais qui suivent de la manière suivante: on introduit dans un mélangeur interne, rempli à 70% et dont la température initiale de cuve est d'environ 90°C, l'élastomère diénique (coupage NR et BR), la charge renforçante, l'agent de couplage le cas échéant puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute l'agent de recouvrement (lorsque ce dernier est présent) et le système de vulcanisation (soufre et accélérateur sulfénamide) sur un mélangeur externe (homo-finisseur) à 70°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### Essai 1

Cet exemple a pour but de montrer l'amélioration de propriétés obtenues pour une composition pour bande de roulement de pneumatique conforme à l'invention par rapport à des plusieurs compositions de bande de roulement notamment une composition témoin « classique » pour véhicule Poids Lourds.

Les compositions ont été fabriquées conformément au procédé détaillé dans le paragraphe précédent. Ces compositions détaillées dans le tableau 1 (où les quantités sont exprimées en pce, parties en poids pour cent parties d'élastomère) qui suit, diffèrent par la nature de leur charge renforçante respective, ainsi que par la présence de zinc.

Les formulations sont présentées dans le tableau 1 qui suit.

**Tableau 1**

| **Composition :** | **A** | **B** | **C** | **D** |
|---|---|---|---|---|
| NR (1) | 80 | 80 | 80 | 80 |
| BR (2) | 20 | 20 | 20 | 20 |
| Noir de carbone (3) | 45 | 45 | 3 | 3 |
| Silice (4) | - | - | 45 | 45 |
| Agent de couplage (5) | - | - | 4,5 | 4,5 |
| Cire | 1 | 1 | 1 | 1 |
| Antioxydant (6) | 3 | 3 | 3 | 3 |
| ZnO | 2,6 | 1 | 2,6 | 1 |
| Acide stéarique | 2 | 2 | 2 | 2 |
| Soufre | 1,5 | 1,5 | 1,5 | 1,5 |
| Accélérateur (7) | 0,9 | 0,9 | 0,9 | 0,9 |

| | | | | |
|---|---|---|---|---|
| (1) caoutchouc naturel; (2) BR avec 4,3% de 1-2 ; 2,7% de trans ; 93% de cis 1-4 (Tg = -106°C) ; (3) Noir de carbone N234 commercialisé par la société Cabot Corporation (4) Silice « Zeosil 1165MP » commercialisé par la société Rhodia (5) agent de couplage TESPT ("Si69" de la société Evonik) ; (6) N-1,3-diméthylbutyl-N-phénylparaphénylènediamine (Santoflex 6-PPD de la société Flexsys) ; (7) N-cyclohexyl-2-benzothiazyl-sulfénamide (Santocure CBS de la société Flexsys). | | | | |

Ainsi les compositions A, B, C et D sont définies comme suit :
- la composition témoin A est une composition de bande de roulement de pneumatique de véhicule Poids Lourds « classique » incluant du noir de carbone à titre de charge renforçante et 2,6 pce de ZnO,
- la composition B non-conforme à l'invention est une composition identique à la composition A à l'exception du taux de ZnO qui a été réduit est de 1 pce,
- la composition témoin C non-conforme à l'invention est une composition identique à la composition A à l'exception de la charge renforçante qui comprend 45 pce de silice et 3 pce de noir de carbone,
- la composition D conforme à l'invention est une composition identique à la composition C à l'exception du taux de ZnO qui a été réduit à 1 pce.

Les propriétés de caoutchouterie de ces quatre compositions sont mesurées avant cuisson et après cuisson à 150°C pendant 60 minutes, les résultats obtenus sont portés sur le tableau 2.

**Tableau 2**

| **Composition** : | **A** | **B** | **C** | **D** |
|---|---|---|---|---|
| ***Rhémoétrie*** | | | | |
| Tᵢ | 13,1 | 12,7 | 31,7 | 20,1 |
| ***Propriétés avant cuisson*** | | | | |
| Mooney | 41 | 43 | 40 | 41 |
| ***Propriétés après cuisson*** | | | | |
| Tan (δ)max | 0,14 | 0,15 | 0,10 | 0,11 |
| G^{∗} | 1,49 | 1,48 | 1,35 | 1,45 |

On constate que la diminution du taux de zinc pour la composition B comportant majoritairement du noir de carbone, n'entraîne aucun effet particulier ni sur la phase retard de cuisson (représentée par la valeur Ti).

De façon attendue la composition C (contenant très majoritairement de la silice) par rapport aux compositions A et B, présente une hystérèse améliorée (valeur de Tan (δ)max beaucoup plus faible), et une phase retard de cuisson plus longue que celle des compositions comprenant du noir de carbone. Mais on constate de façon très surprenante que la composition D qui ne diffère de la composition C que par le taux beaucoup plus faible de zinc à base de silice, permet une très nette réduction de la phase retard, tout en maintenant les avantages observés liés à l'utilisation de la silice en tant que charge renforçante. On notera, de plus, que les propriétés dynamiques de la composition D présentent un compromis rigidité /hystérèse globalement équivalent à la composition C et une hystérèse fortement améliorée en comparaison du témoin classique A.

### Essai 2

Cet exemple a pour but de montrer l'avantage totalement étonnant de pneumatiques poids lourds ayant une bande de roulement de composition D précédente conforme à l'invention, par rapport à des pneumatiques comportant une bande de roulement de composition C précédemment décrite.

Les bandes de roulement de pneumatiques ont été fabriquées conformément au procédé décrit précédemment dans la description pour des pneumatiques de dimensions. 315/70 R22.5.

Ces pneumatiques ont été montés sur l'essieu « drive » d'un poids lourds : tracteur de la marque SCANIA, SCA R560.

Les résultats obtenus à la suite du test d'usure sont présentés dans le tableau 3 suivant :

**Tableau 3**

| **Composition** : | **C** | **D** |
|---|---|---|
| Performance Usure | 100 | 115 |

On constate de façon inopinée que le pneumatique ayant une bande de roulement de composition D conforme à l'invention présente une performance en usure très significativement améliorée par rapport à la performance obtenue avec le pneumatique dont la bande de roulement à une composition C (qui est identique à la composition D à l'exception de la quantité de Zinc, classique pour la composition C et très réduit pour la composition D).

## Revendications

1. Bande de roulement pour pneumatique ayant une composition de caoutchouc à base d'au moins un polyisoprène, naturel ou de synthèse, avec un taux allant de 50 pce à 90 pce, une charge renforçante comprenant majoritairement en poids de la charge inorganique, un agent de couplage, un plastifiant avec un taux inférieur ou égal à 10 pce et un système de réticulation au soufre, **caractérisé en ce que** la composition contient un taux de zinc allant de 0,7 à 1,5 pce et comprend en outre un polybutadiène, BR, ou un copolymère butadiène-styrène, SBR.

2. Bande de roulement selon la revendication 1, dans laquelle la charge inorganique comprend de la silice.

3. Bande de roulement selon la revendication 1, dans laquelle la charge inorganique est constituée par de la silice.

4. Bande de roulement selon l'une quelconque des revendications précédentes, dans laquelle le taux de zinc va de 1 à 1,5 pce.

5. Bande de roulement selon l'une quelconque des revendications précédentes, dans laquelle la charge inorganique représente au moins 60% massique de la charge renforçante.

6. Bande de roulement selon l'une quelconque des revendications 1 à 3, dans laquelle la charge inorganique représente au moins 75 % massique de la charge renforçante.

7. Bande de roulement selon l'une quelconque des revendications 1 à 4, dans laquelle la charge inorganique représente au moins 90% de la charge renforçante.

8. Bande de roulement selon l'une quelconque des revendications précédentes, dans laquelle le taux de BR ou de SBR va de 10 à 50 pce.

9. Bande de roulement selon l'une quelconque des revendications 1 à 8, dans laquelle le taux de polyisoprène va de 60 à 90 pce et que la composition comprend un BR ou un SBR avec un taux de 10 à 40 pce.

10. Bande de roulement selon l'une quelconque des revendications 1 à 9, dans laquelle la composition comprend un troisième élastomère diénique différent des deux premiers élastomères choisi parmi les polybutadiènes, les copolymères styrène-butadiènes, les copolymères d'isoprène-butadiène, les copolymères d'isoprène-styrène et les copolymères d'isoprène-butadiène-styrène

11. Bande de roulement selon la revendication 10, dans laquelle le taux de polyisoprène va de 50 à 80 pce et dont la composition comprend un BR avec un taux de 10 à 40 pce et un SBR avec un taux de 10 à 40 pce.

12. Bande de roulement selon l'une quelconque des revendications précédentes, dans laquelle le taux total de charge renforçante va de 30 à 90 pce.

13. Bande de roulement selon l'une quelconque des revendications précédentes, dans laquelle le taux total de charge renforçante va de 40 à 80 pce, de préférence de 45 à 70 pce.

14. Bande de roulement selon l'une quelconque des revendications précédentes, dans laquelle le taux de plastifiant est inférieur ou égal à 5 pce, de préférence inférieur ou égal à 2 pce.

15. Pneumatique comportant une bande de roulement selon l'une quelconque des revendications 1 à 15.

## Patentansprüche

1. Reifenlauffläche mit einer Kautschukzusammensetzung auf Basis von mindestens einem natürlichen oder synthetischen Polyisopren mit einem Gehalt im Bereich von 50 phe bis 90 phe, verstärkendem Füllstoff, der gewichtsbezogen hauptsächlich anorganischen Füllstoff umfasst, einem Kupplungsmittel, einem Weichmacher mit einem Gehalt kleiner oder gleich 10 phe und einem Schwefel-Vernetzungssystem, **dadurch gekennzeichnet, dass** die Zusammensetzung einen Zinkgehalt im Bereich von 0,7 bis 1,5 phe aufweist und außerdem ein Polybutadien, BR, oder ein Butadien-Styrol-Copolymer, SBR, umfasst.

2. Lauffläche nach Anspruch 1, wobei der anorganische Füllstoff Kieselsäure umfasst.

3. Lauffläche nach Anspruch 1, wobei der anorganische Füllstoff aus Kieselsäure besteht.

4. Lauffläche nach einem der vorhergehenden Ansprüche, wobei der Zinkgehalt im Bereich von 1 bis 1,5 phe liegt.

5. Lauffläche nach einem der vorhergehenden Ansprüche, wobei der anorganische Füllstoff mindestens 60 Massen-% des verstärkenden Füllstoffs ausmacht.

6. Lauffläche nach einem der vorhergehenden Ansprüche 1 bis 3, wobei der anorganische Füllstoff mindestens 75 Massen-% des verstärkenden Füllstoffs ausmacht.

7. Lauffläche nach einem der vorhergehenden Ansprüche 1 bis 4, wobei der anorganische Füllstoff mindestens 90 Massen-% des verstärkenden Füllstoffs ausmacht.

8. Lauffläche nach einem der vorhergehenden Ansprüche, wobei der BR- oder SBR-Gehalt im Bereich von 10 bis 50 phe liegt.

9. Lauffläche nach einem der Ansprüche 1 bis 8, wobei der Polyisoprengehalt im Bereich von 60 bis 90 phe liegt und die Zusammensetzung einen BR oder SBR mit einem Gehalt von 10 bis 40 phe umfasst.

10. Lauffläche nach einem der Ansprüche 1 bis 9, wobei die Zusammensetzung ein drittes Dienelastomer umfasst, das von den beiden ersten Elastomeren verschieden ist und aus Polybutadienen, StyrolButadien-Copolymeren, Isopren-Butadien-Copolymeren, Isopren-Styrol-Copolymeren und Isopren-Butadien-Styrol-Copolymeren ausgewählt ist.

11. Lauffläche nach Anspruch 10, wobei der Polyisoprengehalt im Bereich von 50 bis 80 phe liegt und die Zusammensetzung einen BR mit einem Gehalt von 10 bis 40 phe und einen SBR mit einem Gehalt von 10 bis 40 phe umfasst.

12. Lauffläche nach einem der vorhergehenden Ansprüche, wobei der Gesamtgehalt von verstärkendem Füllstoff 30 bis 90 phe beträgt.

13. Lauffläche nach einem der vorhergehenden Ansprüche, wobei der Gesamtgehalt von verstärkendem Füllstoff 40 bis 80 phe, vorzugsweise 45 bis 70 phe, beträgt.

14. Lauffläche nach einem der vorhergehenden Ansprüche, wobei der Weichmachergehalt kleiner oder gleich 5 phe, vorzugsweise kleiner oder gleich 2 phe, ist.

15. Reifen, umfassend eine Lauffläche nach einem der Ansprüche 1 bis 15.

## Claims

1. Tyre tread having a rubber composition based on at least one natural or synthetic polyisoprene, at a content ranging from 50 phr to 90 phr, a reinforcing filler comprising predominantly, by weight, an inorganic filler, a coupling agent, a plasticizing agent at a content of less than or equal to 10 phr and a sulphur-based crosslinking system, **characterized in that** the composition contains a zinc content ranging from 0.7 to 1,5 phr and also comprises a polybutadiene, BR, or a butadiene-styrene copolymer, SBR.

2. Tread according to claim 1, in which the inorganic filler comprises silica.

3. Tread according to claim 1, in which the inorganic filler consists of silica.

4. Tread according to any one of the preceding claims, in which the zinc content ranges from 1 to 1.5 phr.

5. Tread according to any one of the preceding claims, in which the inorganic filler represents at least 60% by weight of the reinforcing filler.

6. Tread according to any one of Claims 1 to 3, in which the inorganic filler represents at least 75% by weight of the reinforcing filler.

7. Tread according to any one of Claims 1 to 4, in which the inorganic filler represents at least 90% of the reinforcing filler.

8. Tread according to any one of the preceding claims, in which the content of BR or of SBR ranges from 10 to 50 phr.

9. Tread according to any one of Claims 1 to 8, in which the content of polyisoprene ranges from 60 to 90 phr and the composition comprises a BR or an SBR at a content of 10 to 40 phr.

10. Tread according to any one of Claims 1 to 9, in which the composition comprises a third diene elastomer different from the two first elastomers, chosen from polybutadienes, styrenebutadiene copolymers, isoprene-butadiene copolymers, isoprene-styrene copolymers and isoprene-butadiene-styrene copolymers.

11. Tread according to Claim 10, in which the content of polyisoprene ranges from 50 to 80 phr and the composition of which comprises a BR at a content of 10 to 40 phr and an SBR at a content of 10 to 40 phr.

12. Tread according to any one of the preceding claims, in which the total content of reinforcing filler ranges from 30 to 90 phr.

13. Tread according to any one of the preceding claims, in which the total content of reinforcing filler ranges from 40 to 80 phr, preferably from 45 to 70 phr.

14. Tread according to any one of the preceding claims, in which the content of plasticizing agent is less than or equal to 5 phr, more preferably, less than or equal to 2 phr.

15. Tyre comprising a tread according to any one of Claims 1 to 15.
